# EUROPÄISCHE PATENTANMELDUNG

(11) **EP 0 804 044 A1**
(43) Veröffentlichungstag der Anmeldung: **29.10.1997**
(21) Anmeldenummer: 96106449.0
(22) Anmeldetag: 24.04.1996
(51) Int. Cl.: H04Q 3/00

(54) **Service Control Point in einem Intelligent Network**

(71) Anmelder: SIEMENS AKTIENGESELLSCHAFT, 80333 München (DE)
(72) Erfinder: Krenn, Andreas, Ing., 1210 Wien (AT)

(57) **Zusammenfassung**

Bei SCPs, die mehrere Computing Einheiten CE umfassen, wird durch die erfindungsgemäße jeweilige Zuordnung eines bestimmten Bearbeitungs-Bereichs von Dienst-Kennzahlen bzw. IN-Nummern zu einer CE eine Optimierung des Ruf-Durchsatzes erreicht.

## Beschreibung

Bei größeren Service Control Points, die mehrere Computing Einheiten zur parallelen Bearbeitung von IN-Calls umfassen, gibt es zwei wesentliche Bottlenecks, die den erreichbaren Durchsatz (Calls pro Zeiteinheit) limitieren, nämlich den Zugriff auf absolute Zähler (absolute Zähler zählen Ereignisse, z.B. Calls, um Funktionen wie bspw. call limitation oder n-th call zu realisieren) und den Zugriff auf RAM-Speicher der Computing Einheiten für das Caching der Routing-Daten (Routing-Daten sind Daten, die die Ausführung eines Dienstes am Service Control Point in Abhängigkeit der IN-Nummer beschreiben).

Bei vielen IN-Diensten sind pro Ruf (Call) ein oder mehrere absolute Zähler zu incrementieren. Dabei ist eine Computing Einheit jeweils für die Verwaltung eines bestimmten absoluten Zählers zuständig. Wenn nun ein Ruf, der den Stand dieses Zählers beeinflußt, auf einer anderen Computing Einheit bearbeitet wird, muß der Auftrag zum Incrementieren des Zählers an die für diesen Zähler zuständige Computing Einheit gesendet werden und deren Antwort abgewartet werden (Kommunikations-Bottleneck). Je mehr aktive Computing Einheiten vorhanden sind, desto größer ist somit die Wahrscheinlichkeit, daß ein absoluter Zähler nicht auf derjenigen Computing Einheit vorhanden ist, auf der der Ruf bearbeitet wird. Bei Verwendung von Ethernet als Kommunikationsmedium kann die erhöhte Kommunikation zusätzlich zu 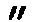 treshing" (Redukion des erreichbaren Durchsatzes am Bus aufgrund erhöhter Kollisionsrate) führen.

Für das Caching der Routing-Daten wird sehr viel Speicher beansprucht. Aus diesem Grund ist es selbst bei Ausbauten des RAM-Speichers in einer Größenordnung von 200 MB (oder mehr) nicht möglich, auf einer Computing Einheit zu jeder Zeit sämtliche Rufnummern-Bäume (Routing-Trees), die die genannten Routing-Daten und Referenzen auf absolute Zähler beinhalten, im RAM-Speicher zu halten.

Wenn sich die für einen Ruf erforderlichen Routing-Daten aus den genannten Gründen nicht im RAM-Speicher befinden, müssen sie von einem für die Computing Einheiten gemeinsamen Speicher geladen werden (Speicher-Bottleneck) und es kommt in diesem Fall zu zeitraubenden 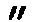 Page Faults" (Ein- und Auslagerungsvorgänge von Daten und Programmen aus dem RAM-Speicher). Wenn die Rate der Page Faults zu groß wird, kann es zu treshing kommen, wobei dann oft alle Rufe zu langsam bearbeitet werden (hohe Call-Fehler-Raten sind die Folge).

Wenn der durch einen Ruf beeinflußte absolute Zähler von einer anderen Computing Einheit verwaltet wird, muß der Auftrag zum Incrementieren dieses Zählers an die für den Zähler zuständige Computing Einheit gesendet werden und deren Antwort abgewartet werden (Kommunikations-Bottleneck).

Der Erfindung liegt die Aufgabe zugrunde, die genannten Nachteile zu überwinden.

Die genannte Aufgabe wird durch einen Service Control Point gemäß den Merkmalen von Anspruch 1 gelöst.

Durch die genannte erfindungsgemäße Zuordnung von Bearbeitungsbereichen für die Computing Einheiten des Service Control Point benötigt eine Computing Einheit im RAM-Speicher nur diejenigen Resourcen (absolute Zähler und Routing-Trees), für die aufgrund des zugeordneten Bereichs die Möglichkeit besteht, daß auf sie im Zuge der Bearbeitung eines Call zugegriffen werden muß. Dadurch entfällt für eine Computing Einheit somit mit hoher Wahrscheinlichkeit die Notwendigkeit, im Rahmen der Bearbeitung eines Calls bezüglich des Inkrementierens eines absoluten Zählers eine Kommunikation mit einer anderen Computing Einheit durchzuführen oder bezüglich des benötigten Routing-Trees einen Ladevorgang vom Sekundärspeicher durchzuführen.

Außerdem entfällt die Notwendigkeit einer Stand-by-CE, die nur bei Ausfall einer CE die Last der ausgefallenen CE übernimmt und im Normalfall keine Nutzlast bearbeitet.

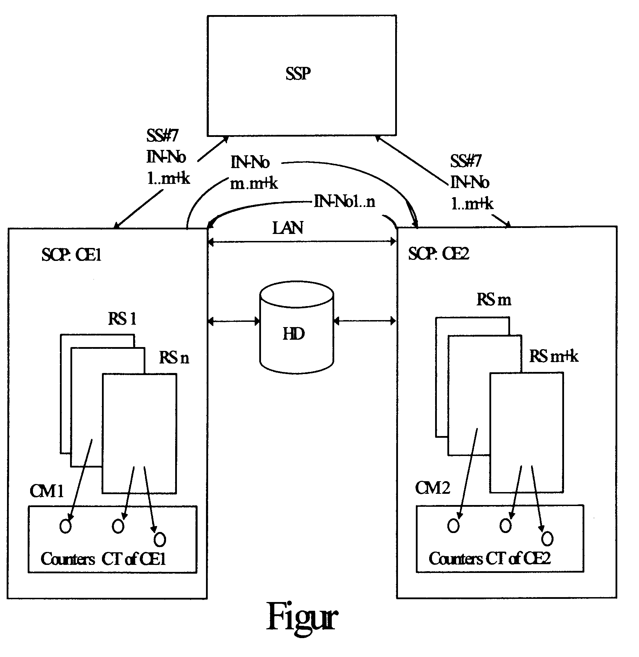

Im folgenden wird ein Ausführungsbeispiel der Erfindung anhand der Zeichnung näher erläutert.

Die Figur zeigt die Struktur eines bsph. Service Control Point SCP, der zwei Computing Einheiten CE1 und CE2 umfaßt. Jeder Computing Einheit ist ein bestimmter Bereich von Dienst-Kennzahlen und/oder IN-Nummern IN-No zugeordnet. Der Zugang eines Rufes (Calls) zu dem SCP erfolgt über einen Service Switching Point SSP und das Signalisierungssystem SS#7.

Die im Rahmen der Bearbeitung eines Calls zu Diensten bzw. IN-Nummern aus diesem Bereich benötigten Resourcen(absolute Zähler CT, Routing-Trees bzw. Routing-Daten) sind entsprechend auf die vorhandenen Computing Einheiten bzw. deren RAM-Speicher aufgeteilt. Zur Bezeichnung bzw. Adressierung der Resourcen ist für jeden Dienst bzw. jede IN-Nummer ein Resources-Set RS vorhanden, das entsprechende Referenzen auf die für einen Ruf zu diesem Dienst (bzw. dieser IN-Nummer) zu verwendenden Resourcen beinhaltet. Die absoluten Zähler CT einer Computing Einheit CE werden von einem Zähler-Manager CM verwaltet.

Die genannte Zuordnung bzw. Aufteilung der Dienst-Kennzahlen bzw. IN-Nummern kann dynamisch nach (verkehrs-)statistischen Kriterien (z.B. bei permanenter Überlast einer CE) durchgeführt werden. Rufe (Calls), die auf einer anderen als der für die Bearbeitung zuständigen Computing Einheit ankommen, werden auf die zuständige Computing Einheit umgeleitet. Die dazu notwendige Kommunikation wird über ein entsprechendes Kommunikationsmedium LAN durchgeführt.

Falls eine Gleichverteilung der Last durch die genannte dynamische Aufteilung nicht mehr möglich ist (z.B. wenn eine einzige IN-Nummer die Überlast allein erzeugt), können ankommende Calls von einer oder mehreren anderen Computing Einheiten übernommen werden. Dies bedeutet allerdings kurzfristig ein Sinken der Performance, da sich eine Computing Einheit, die einen Call von einer überlasteten Computing Einheit übernimmt, zunächst die zu dessen Bearbeitung benötigten Resourcen IN-No (absolute Zähler CT, Routing Daten) entweder von einem Sekundärspeicher HD oder von der überlasteten CE durch einen entsprechenden Kommunikationsvorgang holen muß.

## Patentansprüche

1. Service Control Point in einem Intelligent Network, mit mehreren Computing Einheiten (CE), die IN-Calls parallel bearbeiten,
**dadurch gekennzeichnet,**
daß einer Computing Einheit jeweils ein bestimmter Bereich von Dienst-Kennzahlen und/oder IN-Nummern zur Bearbeitung zugeordnet ist.

2. Service Control Point nach Anspruch 1,
**gekennzeichnet** durch
eine Lastverteilungskomponente, die einer Computing Einheit den genannten Bereich nach statistischen Kriterien dynamisch zuordnet.

3. Service Control Point nach Anspruch 1 oder 2,
**dadurch gekennzeichnet,**
daß bei Überlast einer Computing Einheit, andere Computing Einheiten, die sich nicht im Überlastzustand befinden, die Überlast übernehmen.
